# EUROPÄISCHE PATENTANMELDUNG

(11) **EP 1 024 246 A1**
(43) Veröffentlichungstag der Anmeldung: **02.08.2000**
(21) Anmeldenummer: 00100288.0
(22) Anmeldetag: 20.01.2000
(51) Int. Cl.: E21B 10/44, E21B 10/58

(54) **Bohrwerkzeug**

(30) Priorität: 26.01.1999 DE 29901296 U
(71) Anmelder: PLICA WERKZEUGFABRIK AG, 8753 Mollis (CH)
(72) Erfinder: Jenny, Rudolf, 8753 Mollis (CH)
(74) Vertreter: Sties, Jochen, Dipl.-Ing.

(57) **Zusammenfassung**

Ein Bohrwerkzeug mit einem Bohrkopf (12), in welchem eine sich entlang einem Durchmesser (D) des Bohrkopfes erstreckende Hauptbrechplatte (14) sowie zwei Nebenbrechelemente (16) angeordnet sind, ist dadurch gekennzeichnet, daß die Nebenbrechelemente (16), in einer Draufsicht auf den Bohrkopf parallel zur Mittellängsachse (M) des Bohrwerkzeugs gesehen, auf der einen und der anderen Seite der Hauptbrechplatte (14) auf einer Linie (L) angeordnet sind, die senkrecht zu dem von der Hauptbrechplatte (14) definierten Durchmesser (D), jedoch nicht durch die Mittellängsachse (M) des Bohrwerkzeugs verlauft.

## Beschreibung

Die Erfindung betrifft ein Bohrwerkzeug mit einem Bohrkopf, in welchem eine sich entlang einem Durchmesser des Bohrkopfes erstreckende Hauptbrechplatte sowie zwei Nebenbrechelemente angeordnet sind.

Ein solches Bohrwerkzeug ist aus der deutschen Offenlegungsschrift 40 11 441 sowie der deutschen Patentschrift 195 16 270 bekannt. Die Nebenbrechelemente, die entweder als Brechbolzen oder als Brechplatten ausgeführt sein können, unterstützen die Hauptbrechplatte bei der Zertrümmerung des zu bohrenden Materials.

Die Aufgabe der Erfindung besteht darin, ein Bohrwerkzeug zu schaffen, bei dem ein besserer Kompromiß zwischen Bohrleistung und Standzeit erzielbar ist.

Diese Aufgabe wird bei einem Bohrwerkzeug der eingangs genannten Art dadurch gelöst, daß die Nebenbrechelemente, in einer Draufsicht auf den Bohrkopf parallel zur Mittellängsachse des Bohrwerkzeugs gesehen, auf der einen und der anderen Seite der Hauptbrechplatte auf einer Linie angeordnet sind, die senkrecht zu dem von der Hauptbrechplatte definierten Durchmesser, jedoch nicht durch die Mittellängsachse des Bohrwerkzeugs verläuft. Die bezüglich der Mittellängsachse des Bohrwerkzeugs asymmetrische Anordnung der Nebenbrechelemente eröffnet verschiedene Möglichkeiten, mit denen die Bohrleistungen des Bohrwerkzeugs in der gewünschten Weise eingestellt werden können.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Die Figuren 1a bis 1c in zwei Seitenansichten und einer Draufsicht ein Bohrwerkzeug gemäß einer ersten Ausführungsform der Erfindung;
- die Figuren 2a bis 2d in zwei Seitenansichten, einer Draufsicht und einer perspektivischen Ansicht ein Bohrwerkzeug gemäß einer zweiten Ausführungsform der Erfindung; und
- die Figuren 3a bis 3c in zwei Seitenansichten und einer Draufsicht ein Bohrwerkzeug gemäß einer dritten Ausführungsform der Erfindung.

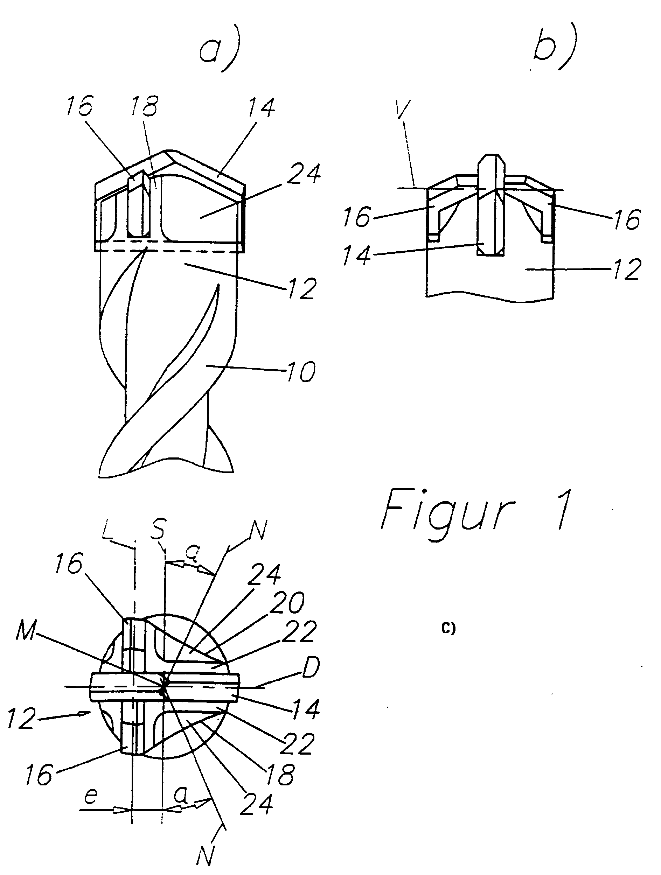

In den Figuren 1a bis 1c ist ein Bohrwerkzeug gemäß einer ersten Ausführungsform der Erfindung gezeigt. Es enthält einen zweispiraligen Schaft 10 sowie einen Bohrkopf 12. Entlang einem Durchmesser D des Bohrkopfes 12 erstreckt sich eine Hauptbrechplatte 14, die eine allgemein dachförmige Gestalt hat. Die Hauptbrechplatte 14 steht mit ihren beiden radial außenliegenden Enden geringfügig über den Außenumfang des Bohrkopfes 12 hervor.

Auf der einen und der anderen Seite der Hauptbrechplatte 14 ist jeweils als Nebenbrechelement eine Nebenbrechplatte 16 angeordnet. Die Mittellängsebene der beiden Nebenbrechplatten liegen auf einer gemeinsamen Linie L, die sich senkrecht zum Durchmesser D erstreckt, jedoch nicht durch die Mittellängsachse M des Werkzeugs verläuft. Die Mittellängsebene der beiden Nebenbrechplatten ist also gegenüber der Mittellängsachse M um eine Strecke e verschoben, wobei die Strecke e bei der gezeigten Ausführungsform so bemessen ist, daß eine die Mittellängsachse M enthaltende und zum Durchmesser D senkrechte Ebene die Nebenbrechplatten 16 nicht schneidet. Anders ausgedrückt ist die Strecke e größer als die halbe Dicke der Nebenbrechplatten. Es ist bei anderen Ausführungsformen grundsätzlich auch möglich, daß die Strecke e nur etwa 1 bis 2 mm beträgt.

Wie insbesondere in Figur 1b zu sehen ist, ist die Schneide der Nebenbrechplatten 16 nach außen hin abgeschrägt. Die radial außenliegenden Enden der Nebenbrechplatten 16 liegen etwa auf demselben Niveau wie die radial außenliegenden Enden der Hauptbrechplatte 14, wie durch die in Figur 1b angedeutete Ebene V gezeigt ist.

Am Bohrkopf sind zwei Bohrgut-Abfuhrnuten 18, 20 ausgebildet. Sie dienen dazu, das von den Haupt- und Nebenbrechplatten zertrümmerte Material zur am Schaft ausgebildeten zweigängigen Wendel zu führen, damit es aus dem Bohrloch heraustransportiert werden kann. Aufgrund der exzentrischen Anordnung der beiden Nebenbrechplatten 16 bezüglich der Mittellängsachse M sind die beiden Abfuhrnuten 18, 20 nicht einander diametral gegenüberliegend angeordnet. Gegenüber einer zum Durchmesser D senkrechten und durch die Mittellängsachse M verlaufenden Ebene S ist die Mittelebene N jeder Abfuhrnut 18, 20 um einen Winkel a verdreht, wobei der Winkel a bei der gezeigten Ausführungsform zwischen 20 und 35° beträgt. Grundsätzlich sind Winkel zwischen 5° und 35° möglich. Je kleiner der Winkel a gewählt wird, desto größer wird eine Verdichtungsfläche 22, die zwischen der Hauptbrechplatte 14, der entsprechenden Nebenbrechplatte 16 und der entsprechenden Abfuhrnut gebildet ist. Eine Vergrößerung der Verdichtungsflächen 22 führt zu einer längeren Standzeit, während eine Verkleinerung zu einer größeren Einschlagleistung und somit einer höheren Bohrleistung, jedoch geringerer Standzeit führt. Es wird darauf hingewiesen, daß die Mittelebene der Abfuhrnuten nicht notwendigerweise durch die Mittellängsachse M des Bohrwerkzeugs verlaufen muß. Ein weiterer Parameter zur Beeinflussung der Größe der Verdichtungsflächen 22 besteht in einer abgeschrägten Fläche 24, die sich ausgehend von den Verdichtungsflächen 22 in Richtung der Wendeln erstreckt.

Die Länge der beiden Abfuhrflächen 18, 20 ist unterschiedlich. Dies ist darauf zurückzuführen, daß die beiden Abfuhrflächen einander nicht diametral gegenüberliegen. Nur in diesem Fall wäre eine gleiche Länge der beiden Flächen möglich, da die beiden Abfuhrflächen in demselben Winkelabstand voneinander angeordnet wären wie auch die beiden Wendeln. Dies verdeutlicht die folgende Betrachtung anhand insbesondere der Figuren 1a und 1c. Es sei angenommen, daß die beiden Abfuhrnuten 18, 20 einander diametral derart gegenüberliegend angeordnet sind, daß ihre Mittelebenen N mit der Ebene S zusammenfallen. In diesem Fall hätte jede Abfuhrfläche eine Referenzlänge bis zum Übergang in die entsprechende Wendel, wobei die beiden Referenzlängen gleich sind. Wenn nun die Abfuhrfläche 18 gedanklich bis in die in Figur 1 gezeigte Stellung um den Winkel a verschoben wird, verkürzt sich dabei die Länge der Abfuhrfläche gegenüber der Referenzlänge, da der Übergang in die entsprechende Wendel an einer anderen Umfangsstelle erfolgt. Die Längenänderung ist proportional der Steigung und dem Betrag der Verschiebung. Wenn dagegen die Abfuhrfläche 20 aus der gedanklichen Referenzstellung in die in Figur 1 gezeigte Stellung verschoben wird, kommt es zu einer Erhöhung der Länge der Abfuhrfläche gegenüber der Referenzlänge, da die Verschiebung in einer Richtung erfolgt, die entgegengesetzt zu derjenigen bezüglich der Abfuhrfläche 18 ist.

Die Herstellung des beschriebenen Bohrwerkzeuges kann mittels einer Schleifscheibe erfolgen, die angestellt in einem Winkel, der der Steigung der zweispiraligen Wendel entspricht, über eine Strecke entsprechend der Länge beispielsweise der Abfuhrnut 18 in den Bohrkopf 12 hineingefahren wird, während das Bohrwerkzeug festgehalten wird. Anschließend wird das Bohrwerkzeug in Drehung versetzt, während gleichzeitig ein Vorschub erzeugt wird. Auf diese Weise wird die erste Wendel geschliffen. Anschließend wird das Bohrwerkzeug gegenüber dem ersten Schleifvorgang unter Berücksichtigung der gewünschten Winkel a gedreht ist. Die Schleifscheibe wird dann unter Erzeugung der Abfuhrnut 20 so weit in den Bohrkopf hineingefahren, daß der Beginn der zweiten Wendel um genau 180° verdreht gegenüber der ersten erreicht wird. Dann erfolgt der weitere Schleifvorgang mit dem entsprechenden Vorschub, so daß die zweite Wendel erzeugt wird.

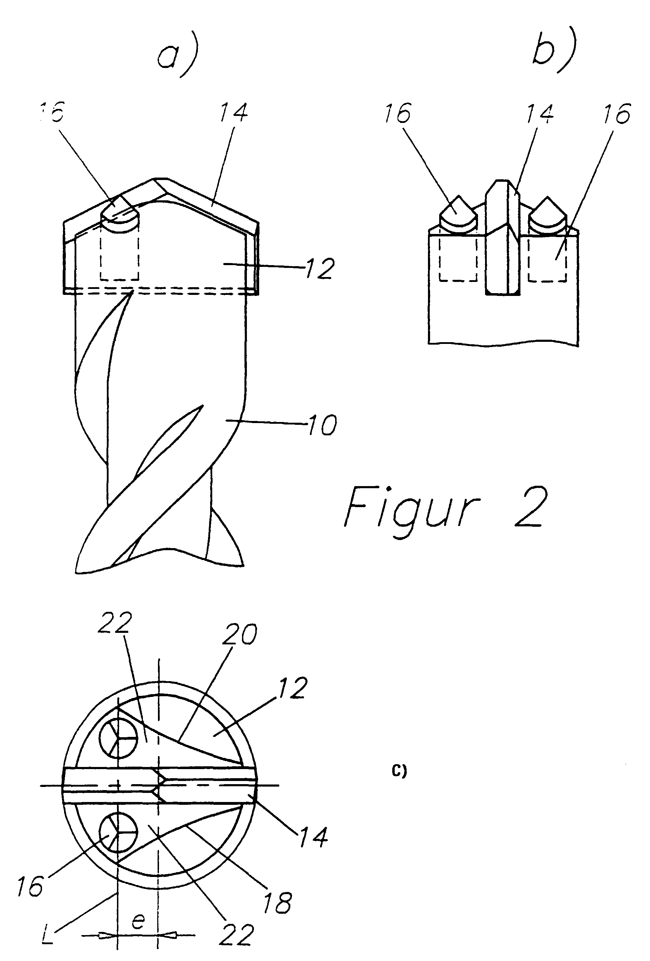

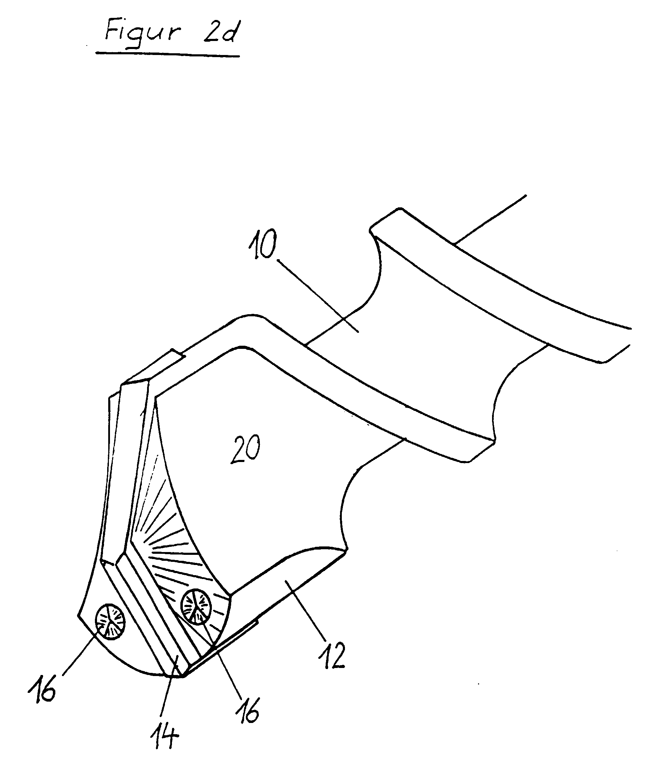

In den Figuren 2a bis 2d ist ein Bohrwerkzeug gemäß einer zweiten Ausführungsform der Erfindung gezeigt. Für die Elemente, die von der ersten Ausführungsform bekannt sind, werden dieselben Bezugszeichen verwendet, und es wird auf die obigen Erläuterungen verwiesen.

Der wesentlichste Unterschied gegenüber der ersten Ausführungsform besteht darin, daß als Nebenbrechelemente zwei Brechbolzen 16 verwendet werden. Auch die beiden Brechbolzen 16 liegen auf einer Linie L, die um eine Strecke e gegenüber der Mittellängsachse des Bohrwerkzeugs verschoben ist. Die Brechbolzen 16 sind dreischneidig mit einer Spitze ausgeführt, wobei die Spitze über die Fläche hervorsteht, die bei einer Drehung des Bohrwerkzeugs von der Schneide der Hauptbrechplatte 14 definiert wird. Die Darstellung in Figur 2a scheint aufgrund der geometrischen Verhältnisse zu suggerieren, daß die Spitze der Brechbolzen genau auf der von der Schneide der Hauptbrechplatte definerten Fläche liegt; tatsächlich wandert die Spitze der Brechbolzen 16, wenn das Bohrwerkzeug in der Ansicht von Figur 2a gedanklich gedreht wird, über die von der Schneide der Hauptbrechplatte definierten Fläche hinaus. Je mehr die Spitze über die von der Hauptbrechplatte definierte Fläche hervorsteht, desto aggressiver ist der Bohrer, desto höher ist also die Bohrleistung.

Ein weiterer Unterschied gegenüber der ersten Ausführungsform besteht darin, daß keine abgeschrägten Flächen 24 vorhanden sind. Die Verdichtungsflächen 22 werden also unmittelbar von dem Winkel a bestimmt, um den die beiden Abfuhrflächen gegenüber einer einander diametral gegenüberliegenden Anordnung verschoben sind.

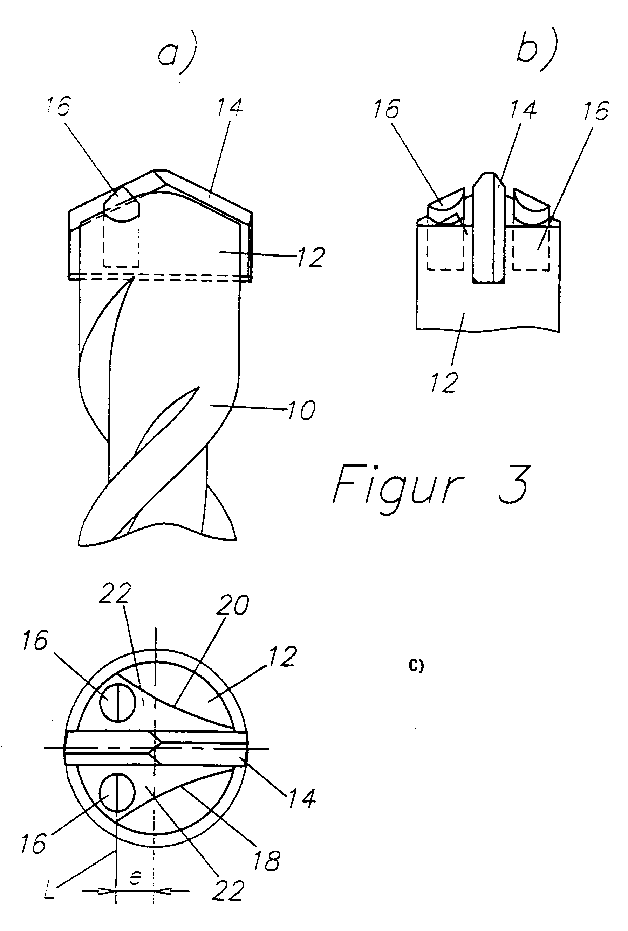

In den Figuren 3a bis 3c ist ein Bohrwerkzeug gemäß einer dritten Ausführungsform der Erfindung gezeigt. Der Unterschied gegenüber der zweiten Ausführungsform besteht darin, daß Brechbolzen 16 mit einer einzigen Schneide verwendet werden, die schräg verläuft. Die beiden Schneiden erstrecken sich in derselben Richtung wie die Linie L, auf der die beiden Brechbolzen 16 angeordnet sind. Auch bei dieser Ausführungsform ragen die beiden Brechbolzen 16 über die Fläche hervor, die von der Schneide der Hauptbrechplatte 14 definiert wird.

## Patentansprüche

1. Bohrwerkzeug mit einem Bohrkopf (12), in welchem eine sich entlang einem Durchmesser des Bohrkopfes (12) erstreckende Hauptbrechplatte (14) sowie zwei Nebenbrechelemente (16) angeordnet sind, dadurch gekennzeichnet, daß die Nebenbrechelemente (16), in einer Draufsicht auf den Bohrkopf (12) parallel zur Mittellängsachse (M) des Bohrwerkzeugs gesehen, auf der einen und der anderen Seite der Hauptbrechplatte (14) auf einer Linie (L) angeordnet sind, die senkrecht zu dem von der Hauptbrechplatte (14) definierten Durchmesser (D), jedoch nicht durch die Mittellängsachse (M) des Bohrwerkzeugs verläuft.

2. Bohrwerkzeug nach Anspurch 1, dadurch gekennzeichnet, daß die beiden Nebenbrechelemente als Nebenbrechplatten (16) ausgeführt sind.

3. Bohrwerkzeug nach Anspruch 2, dadurch gekennzeichnet, daß sich die beiden Nebenbrechplatten (16) bis hin zur Hauptbrechplatte (14) erstrecken.

4. Bohrwerkzeug nach Anspruch 1, dadurch gekennzeichnet, daß die beiden Nebenbrechelemente als Brechbolzen (16) ausgeführt sind.

5. Bohrwerkzeug nach einem der vorhergehenden Ansprüche, dadurch gekennzeichnet, daß es ein zweispiraliges Werkzeug ist.

6. Bohrwerkzeug nach Anspruch 5, dadurch gekennzeichnet, daß zwei Bohrgut-Abfuhrnuten (18, 20) vorgesehen sind, deren Mittelebenen (N) einen Winkel zwischen etwa 140° und etwa 110° miteinander einschließen.

7. Bohrwerkzeug nach Anspruch 6, dadurch gekennzeichnet, daß die Bohrgut-Abfuhrnuten (18, 20), gemessen entlang der Mittellängsachse (M) des Werkzeugs, eine unterschiedliche Länge aufweisen.
